# DEMANDE DE BREVET EUROPEEN

(11) **EP 0 531 261 A2**
(43) Date de publication de la demande: **10.03.1993**
(21) Numéro de dépôt: 92830243.9
(22) Date de dépôt: 20.05.1992
(51) Int. Cl.: B32B 33/00, B29C 63/02, B29C 53/06, B29C 63/06, B29C 63/04

(54) **Feuille en laminé plastique pour le revêtement de surfaces autoportantes caractérisée en ce qu'elle est équipée de zones d'épaisseur réduite**

(30) Priorité: 08.08.1991 IT AN910021 U
(71) Demandeur: MOBILI BERLONI - S.p.A., I-61100 Pesaro (IT)
(72) Inventeur: Berloni, Antonio, I-61100 Pesaro (IT)
(74) Mandataire: Baldi, Claudio

(57) **Abrégé**

La présente invention concerne une feuille en laminé plastique (1) pour le revêtement de panneaux autoportants (2) pour portes ou surfaces de travail, ladite feuille ayant des zones d'épaisseur réduite (1a) en mesure de favoriser le pliage selon des rayons réduits de courbure.

La zone inférieure de ladite feuille présentant un ou plusieurs petits canaux en correspondance desquels l'épaisseur résiduelle de la feuille ne peut de toutes façons être moindre de 0,3 mm.

## Description

La présente demande de brevet pour modèle d'utilité a pour objet une feuille en laminé plastique pour le revêtement de panneaux autoportants pour portes ou surfaces de travail, ladite feuille ayant des zones d'épaisseur réduite an mesure de favoriser le pliage selon des rayons réduits de courbure.

Actuellement, il est notoire, la réalisation - surtout dans le créneau des cuisines modulaires - de meubles soit-disant en laminés, c'est à dire des meubles réalisés en employant des panneaux de matériel plastique stratifié, est particulièrement diffuse.

Parfois ces meubles sont directement réalisés avec de vrais panneaux en laminé plastique de forte épaisseur, mais le plus souvent ils sont réalisés avec des panneaux de bois ou de matériel aggloméré recouverts de feuilles très minces du susdit laminé plastique, produisant ainsi à vue un effet de meubles réalisés avec des panneaux en laminé de forte épaisseur.

L'une des principales difficultés relevées dans la réalisation des susmentionnés meubles en laminé est depuis toujours la réalisation des surfaces arrondies de leurs composants, surtout quand les susdites surfaces arrondies doivent présenter un rayon de courbure particulièrement réduit.

En effet, pour pouvoir plier ces laminés plastiques - tant ceux de forte épaisseur que ceux d'épaisseur réduite - il fallait jusqu'à maintenant recourir à des installations sophistiquées dont les frais de réalisation et d'entretien étaient très élevés et où l'usinage s'effectuait au moyen d'une presse chauffante en mesure, grâce aussi à de particulières conditions de pression et température élevées présentes dans l'installation, de déterminer la courbure désirée pour les éléments en laminé; toutefois il faut remarquer que lesdites installations ne pouvaient pas encore conférer, aux feuilles en laminé, des rayons de courbure extrêmement contenus.

Le but de la présente idée est d'introduire une mince feuille de ravêtement en laminé (dont l'épaisseur varie entre 0,6 et 1,2 mm.) en mesure d'être pliée selon les rayons de courbure les plus réduits.

Comme déjà dit, l'exigence spécifique est celle de réussir à plier ces minces feuilles en laminé selon des rayons de courbure extrêmement réduits, ceci afin de pouvoir convenablement les utiliser, par exemple, pour le revêtement du bord frontal arrondi d'une surface de travail d'une cuisine ou pour le revêtement du bord postérieur des susdites surfaces, étant le susmentionné bord généralement rehaussé; par conséquent pour tous revêtements de zones qui présentent normalement un profil longitudinal plutôt aigu même si leur angle est arrondi.

Afin de pouvoir s'adapter à cette exigence, la feuille en laminé présente une épaisseur réduite en correspondance des zones destinées au revêtement des angles arrondis des surfaces autoportantes situées en-dessous; plus particulièrement il est prévu qu'à la feuille en laminé selon l'idée soit laissée, en correspondance des susmentionnées zones réduites, une épaisseur non inférieure de 0,3 mm.

En effet, il est évident que ladite feuille présentera, en correspondance des zones d'épaisseur réduite, une mineure résistance à la courbure et une majeure flexibilité; ceci permettant pratiquement à cette feuille en laminé plastique de parfaitement s'adapter même aux rayons de courbure particulièrement réduits présents en correspondance de certains angles arrondis des panneaux à recouvrir.

On précise que la réduction des zones prédéterminées du susdit panneau peut économiquement être mise en pratique grâce au retrait par fraisage d'une couche de matériel, en réalisant ainsi sur la face inférieure de la feuille des petits canaux en mesure de favoriser le pliage de la feuille même.

Pour une plus claire explication, la description se poursuit faisant référence aux dessins joints qui sont annexés à titre illustratif et non limitatif et où:
- la figure 1 montre, sectionnée transversalement, la feuille selon l'idée n'ayant pas encore été pliée;
- la figure 2 montre, toujours sectionnée transversalement, la feuille selon l'idée après qu'elle ait été pliée et appliquée sur une surface autoportante qui a été représentée également sectionnée.

Référence les figures annexées, la pièce selon l'idée consiste en une mince feuille de laminé plastique (dont l'épaisseur varie entre 0,6 et 1,2 mm.) qui présente dans sa partie inférieure une ou plusieurs zones dont l'épaisseur ne peut être moindre de 0,3 mm. formant pratiquement des petits canaux rectilignes (1a).

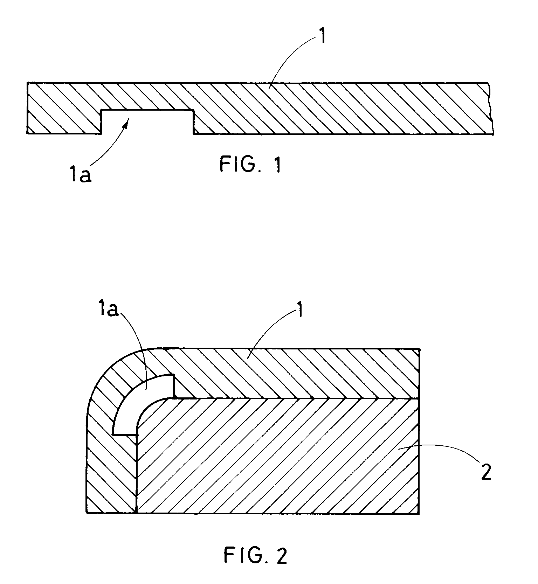

On peut observer comment, à la figure 2, en correspondance des susdits petits canaux (1a), il est possible d'effectuer un pliage - selon des rayons de courbure extrêmement contenus - de la feuille selon l'idée (1) quand celle-ci doit être appliquée pour recouvrir le bord arrondi d'une surface autoportante (2).

## Revendications

**1)** Feuille en laminé plastique pour le revêtement de surfaces autoportantes, ayant des zones d'épaisseur réduite, du type composé d'une mince feuille (1) en laminé plastique dont l'épaisseur peut varier entre 0,6 et 1,2 mm., caractérisée en ce qu'elle présente dans sa partie inférieure une ou plusieurs zones réduites dont l'épaisseur ne peut être moindre de 0,3 mm. et qui forment pratiquement des petits canaux rectilignes (1a).
